# EUROPÄISCHE PATENTSCHRIFT

(11) **EP 2 932 096 B1**
(45) Veröffentlichungstag und Bekanntmachung des Hinweises auf die Patenterteilung: **14.04.2021**
(21) Anmeldenummer: 13779819.5
(22) Anmeldetag: 21.10.2013
(51) Int. Cl.: F04B 1/04, F04B 53/12

(54) **KOLBEN EINER KOLBENPUMPE EINER FAHRZEUGBREMSANLAGE**
PISTON FOR A PISTON PUMP OF A VEHICLE BRAKING SYSTEM
PISTON D'UNE POMPE À PISTON D'UN SYSTÈME DE FREINAGE DE VÉHICULE

(30) Priorität: 14.12.2012 DE 102012223186
(43) Veröffentlichungstag der Anmeldung: 21.10.2015
(73) Patentinhaber: Robert Bosch GmbH, 70442 Stuttgart (DE)
(72) Erfinder: GAERTNER, Oliver, 74232 Abstatt (DE)
(86) Internationale Anmeldenummer: PCT/EP2013/071909
(87) Internationale Veröffentlichungsnummer: WO 2014/090458

(56) Entgegenhaltungen:
- EP-A1- 0 304 103
- EP-A2- 1 647 461
- DE-A1- 19 820 902
- DE-A1-102006 012 964
- DE-A1-102009 008 337
- DE-A1-102010 040 701

## Beschreibung

### Stand der Technik

Die Erfindung betrifft einen Fahrzeugbremsanlagen-Kolbenpumpen-Kolben. Ferner betrifft die Erfindung ein Verfahren zum Herstellen eines Fahrzeugbremsanlagen-Kolbenpumpen-Kolbens.

Ein Bestandteil von modernen Fahrzeugbremsanlagen ist ein Hydroaggregat, welches bei Kraftfahrzeugen, wie beispielsweise Personenkraftwagen oder Lastkraftwagen, verwendet wird, um an deren Bremssystem geregelte Bremsdrücke bereitzustellen. Zum Dosieren dieses Bremsdrucks weist das Hydroaggregat in der Regel eine Fahrzeugbremsanlagen-Kolbenpumpe in Gestalt einer Axialkolbenpumpe auf, bei der ein Fahrzeugbremsanlagen-Kolbenpumpen-Kolben in einem Zylinder verschiebbar ist. Der Fahrzeugbremsanlagen-Kolbenpumpen-Kolben wird von einem Exzenter angetrieben, der an einer Stirnseite des Kolbens an diesem angreift, um ihn für eine Pumpbewegung axial hin und her zu bewegen. Diese Stirnseite des Fahrzeugbremsanlagen-Kolbenpumpen-Kolbens ist damit einer besonderen mechanischen Belastung ausgesetzt. Die gegenüberliegende Stirnseite des Fahrzeugbremsanlagen-Kolbenpumpen-Kolbens dient zum Abdichten eines Pumpenraums bzw. Druckraums des zugehörigen Zylinders. Dazu ist diese Stirnseite des Fahrzeugbremsanlagen-Kolbenpumpen-Kolbens zum Zylinder hin mittels eines am Fahrzeugbremsanlagen-Kolbenpumpen-Kolben angeordneten Dichtelements abgedichtet. Ferner befindet sich an dieser Stirnseite des Fahrzeugbremsanlagen-Kolbenpumpen-Kolbens ein Einlassventil, mit dem während des Betriebs einer solchen Kolbenpumpe das zu pumpende Fluid in den Pumpenraum eingelassen wird. Damit das Fluid von außen zu dem Einlassventil im Fahrzeugbremsanlagen-Kolbenpumpen-Kolben strömen kann, befinden sich an diesem mehrere Querbohrungen. Eine derartige Fahrzeugbremsanlagen-Kolbenpumpe ist beispielsweise aus DE 10 2005 017 131 A1 bekannt.

Aus DE 198 20 902 A1 ist eine Kolbenpumpe einer hydraulischen Fahrzeugbremsanlage bekannt, bei der der Kolben als rohrartiges Bauteil mit einem nach außen stehende Wulst gestaltet ist, der durch Umformen, insbesondere durch Stauchen des Kolbens, hergestellt ist.

### Offenbarung der Erfindung

Erfindungsgemäß ist ein Fahrzeugbremsanlagen-Kolbenpumpen-Kolben gemäß Anspruch 1 geschaffen, der mit einem Blechbiegeteil hergestellt ist. Anders ausgedrückt weist der erfindungsgemäße Fahrzeugbremsanlagen-Kolbenpumpen-Kolben mindestens einen Abschnitt auf, der mit einem gebogenen Blech gestaltet ist. Das Blech ist dabei zunächst ein plattenförmiges bzw. weitgehend ebenes Blechteil, das nachfolgend gebogen worden ist. Erfindungsgemäß wird das zunächst ebene Blech dabei gewickelt, so dass sich eine innen hohle Form des Blechbiegeteils ergibt, die an ihrem Umfang insbesondere geschlossen oder zumindest weitgehend geschlossen ist.

Das Blechbiegeteil gemäß der Erfindung wird dabei vorzugsweise aus einem Blech mit einer Dicke von 2 mm bis 10 mm, vorzugsweise von 4 bis 8 mm, besonders bevorzugt von 6 mm hergestellt. Das erfindungsgemäße Blechbiegeteil weist also im Vergleich zu herkömmlichen Bleichbiegeteilen, wie man sie bei Kraftfahrzeugen insbesondere aus dem Karosseriebau kennt, eine vergleichsweise dicke Wandstärke auf. Zum Biegen des erfindungsgemäßen Blechteils wird das Blech vorzugsweise um einen Dorn oder dergleichen gewickelt.

Besonders bevorzugt ist das Blechbiegeteil als ein innen hohler Mantelkörper gestaltet. Ein solcher hohler Mantelkörper weist ein geringes Eigengewicht und eine geringe träge Masse auf. Dies ist vorteilhaft sowohl im Hinblick auf das Gewicht der damit gestalteten Fahrzeug-Baugruppe, als auch im Hinblick auf das Beschleunigungs- und Schwingungsverhalten des damit geschaffenen Fahrzeugbremsanlagen-Kolbenpumpen-Kolbens. Vorzugsweise ist der hohle Mantelkörper hohlzylindrisch bzw. als eine hohle, zylinderförmige Hülse gestaltet. Dabei ist die Hülse vorzugsweise sowohl an ihrem Außenumfang als auch ihrem Innenumfang kreisförmig. Die zylindrische Form erstreckt sich bevorzugt in Richtung der zugehörigen Kolbenachse.

Bei einer weiteren vorteilhaften Ausgestaltung des erfindungsgemäßen Blechbiegeteils ist dieses vor seinem Biegen als ein Stanzteil hergestellt worden. Bei einem solchen Stanzteil wird zum Herstellen ein Stanzvorgang bzw. Stanzprozess ausgeführt, bei dem das zu bearbeitende Werkstück mit einer Stanze unter hohem Druck mit einem schneidend arbeitenden und/oder pressend arbeitenden Stanzwerkzeug ausgeformt wird. Mit diesem Stanzvorgang kann bei dem Blechteil gemäß der Erfindung in einfacher, kostengünstiger Weise sowohl dessen Außenkontur als auch dessen Innenkontur hergestellt werden. Als Innenkontur können insbesondere sehr einfach an dem Blechteil eine oder mehrere Durchgangsöffnungen ausgebildet werden, die dann später an der hergestellten Fahrzeugbremsanlagen-Kolbenpumpen-Kolbenpumpe als eine Fluidleitung dienen. Solche Fluidleitungen mussten bisher vergleichsweise teuer spanabhebend, also mittels Bohren oder Fräsen ausgebildet werden. Das derart gestanzte Blechteil wird dann, wie oben bereits erwähnt, erfindungsgemäß gewickelt, bevorzugt zu einer im Querschnitt kreisförmigen Hülse. Diese Hülse weist dann erfindungsgemäß eine Nahtstelle entlang seiner Längsrichtung bzw. eine längsseitige Wickelnaht auf, die zusätzlich mittels Schweißen oder Kleben verschlossen sein kann. Die Wickelnaht ist insbesondere in der Regel nach außen im Querschnitt betrachtet V-förmig offen, was das Verschließen, insbesondere mittels Verschweißen mit einer Kehlnaht, erleichtert. Die Wickelnaht kann aber auch gezielt zumindest abschnittsweise offen gehalten sein, so dass durch diesen offenen Abschnitt eine Fluidleitung gebildet sein kann.

An dem Stanzteil ist, wie oben erwähnt, vorzugsweise mindestens eine Durchgangsöffnung ausgebildet. Die Durchgangsöffnung ist am fertig gebogenen bzw. gewickelten Fahrzeugbremsanlagen-Kolbenpumpen-Kolben vorteilhaft eine radial gerichtete Öffnung, mit der eine Einlassöffnung für einströmendes Fluid gebildet ist. Das Fluid strömt dann zu einem ebenfalls am Fahrzeugbremsanlagen-Kolbenpumpen-Kolben angeordneten Einlassventil und durch dieses hindurch in einen zugehörigen Druckraum der Fahrzeugbremsanlagen-Kolbenpumpe. Solche Durchgangsöffnungen können beim Stanzen und/oder Wickeln wie oben erläutert weitgehend kostenneutral hergestellt werden.

Für das Einlassventil ist vorzugsweise am Fahrzeugbremsanlagen-Kolbenpumpen-Kolben ein ringförmiges Ventilsitzteil an dem Blechbiegeteil angeordnet. Mit dem Ventilsitzteil ist dann ein Ventilsitz gebildet, an den ein Ventilschließkörper des Einlassventils angelegt werden kann. Mit dem Ventilschließkörper kann eine im Ventilsitzteil ausgebildete, innen im Ventilsitz vorzufindende Ventilöffnung verschlossen oder geöffnet werden. Das Ventilsitzteil ist dabei neben dem erfindungsgemäßen Blechbiegeteil vorzugsweise ein zweites Bauteil, welches entsprechend insbesondere anders hergestellt worden ist. So können an dem Ventilsitzteil und vor allem an dessen Ventilsitz andere Formgestaltungen mit anderen Maßtoleranzen und auch andere Oberflächenqualitäten hergestellt werden, als an dem Blechbiegeteil. Das Ventilsitzteil ist mit dem Blechbeigeteil sinnvollerweise zumindest eine Schubkraft übertragend verbunden. Vorzugsweise ist das Ventilsitzteil an dem Blechbiegeteil eingepresst oder von dem Blechbiegeteil umwickelt. Das derart gebildete Ventilsitzteil weist als weiteren Bestandteil eines Einlassventils, vorzugsweise an seiner vom Blechbiegeteil abgewandten Seite, noch einen Ventilschließkörperkäfig auf, in dem außer dem Ventilschließkörper auch eine Ventilschließkörperrückstellfeder angeordnet ist.

Vorzugsweise ist das Ventilsitzteil als ein Drehteil, ein Kaltschlagteil oder ein Tiefziehteil hergestellt. Auf diese Weise können die am Ventilsitz geforderten Form- und Maßtoleranzen kostengünstig bereitgestellt werden. Ferner bestehen ausreichend Möglichkeiten, um dort einen Ventilschließkörperkäfig und/oder eine Kolbendichtung anzuordnen..

Bevorzugt ist ferner an dem erfindungsgemäßen Blechteil eine Kolbenstange angeordnet. Die Kolbenstange ist besonders bevorzugt an dem Blechbiegeteil eingepresst oder von dem Blechbiegeteil umwickelt. Die Kolbenstange dient dazu, zumindest Schubkräfte von einem zugehörigen Exzenterantrieb auf die als Druckstempel wirkende Stirnseite des erfindungsgemäßen Fahrzeugbremsanlagen-Kolbenpumpen-Kolbens zu übertragen. Die Kolbenstange dichtet dabei vorteilhaft einen Niederdruckbereich am Fahrzeugbremsanlagen-Kolbenpumpen-Kolben gegen eine Außenbereich ab. Im Niederdruckbereich befindet sich die bereits erwähnte Zuströmung von Fluid in den Fahrzeugbremsanlagen-Kolbenpumpen-Kolben hinein zu dessen Einlassventil. Im Außenbereich befindet sich der Exzenterantrieb. Dort soll sich kein Fluid und insbesondere keine Bremsflüssigkeit sammeln können.

Die Erfindung ist in Entsprechung zu der oben genannten erfindungsgemäßen Vorrichtung ferner auf ein Verfahren zum Herstellen eines Fahrzeugbremsanlagen-Kolbenpumpen-Kolbens gemäß Anspruch 9 mit folgenden Schritten gerichtet: Bereitstellen eines plattenförmigen Blechteils und Biegen des plattenförmigen Blechteils zu einem einen Teil bzw. einen Abschnitt des Fahrzeugbremsanlagen-Kolbenpumpen-Kolbens bildenden Blechbiegeteil.

Beim Bereitstellen des plattenförmigen Blechteils wird dieses wie oben ebenfalls erläutert besonders bevorzugt mittels Stanzen hergestellt.

Nachfolgend wird ein Ausführungsbeispiel der erfindungsgemäßen Lösung anhand der beigefügten schematischen Zeichnungen näher erläutert. Es zeigt:
- Fig. 1: einen Längsschnitt einer Kolbenpumpe für eine Fahrzeugbremsanlage gemäß dem Stand der Technik mit einem Kolben und dessen Kolbenteilen,
- Fig. 2: eine geschnittene, perspektivische Ansicht des Details II gemäß Fig. 1 von einem der Kolbenteile und
- Fig. 3: eine Explosionsansicht eines Fahrzeugbremsanlagen-Kolbenpumpen-Kolbens emäß der Erfindung.

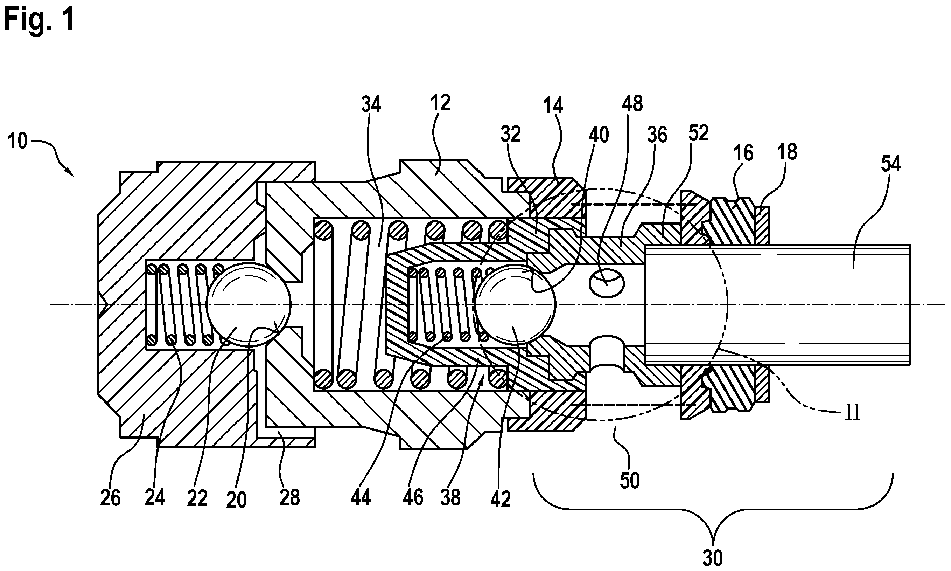

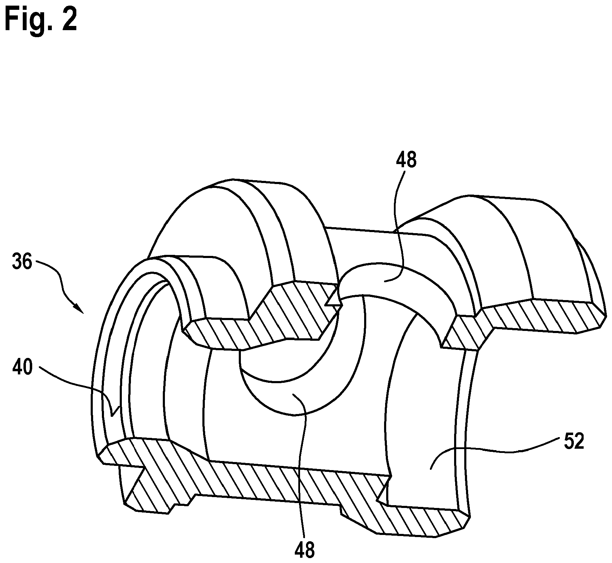

In Fig. 1 und 2 ist eine Fahrzeugbremsanlagen-Kolbenpumpe 10 veranschaulicht, die eine becherförmige Zylinderhülse 12 umfasst. An der offenen Stirnseite der Zylinderhülse 12 befindet sich eine Filterhülse 14 und an diese anschließend ein Niederdruckdichtring 16 sowie ein Stützring 18. Im kreisförmigen Bodenabschnitt der Zylinderhülse 12 befindet sich mittig ein Auslassventilsitz 20, dessen Ventilsitzöffnung mit einem Auslassventilschließkörper 22 verschließbar ist. Der Auslassventilschließkörper 22 wird dabei mittels einer schraubenförmigen Auslassventilrückstellfeder 24 gegen den Auslassventilsitz 20 gedrängt, die sich an einem Pumpendeckel 26 abstützt. In dem Pumpendeckel 26 sind als Auslass 28 Kanäle zum Abführen jenes Bremsfluids unter Druck ausgebildet, das mit der Fahrzeugbremsanlagen-Kolbenpumpe 10 gefördert wurde.

Zum Fördern des Bremsfluids ragt ein Fahrzeugbremsanlagen-Kolbenpumpen-Kolben 30 in die becherförmige Zylinderhülse 12, um in diesem mittels eines Hochdruckdichtrings 32 einen Druckraum 34 abzugrenzen. Der Hochdruckdichtring 32 befindet sich stirnseitig an einem Ventilsitzteil 36 des Fahrzeugbremsanlagen-Kolbenpumpen-Kolbens 30, um dort ein Einlassventil 38 auszubilden.

Dazu ist an dem Ventilsitzteil 36 ein Einlassventilsitz 40 ausgebildet, dessen Ventilöffnung mittels eines kugelförmigen Einlassventilschließkörpers 42 verschließbar ist. Der Einlassventilschließkörper 42 wird mittels einer schraubenförmigen Einlassventilrückstellfeder 44 gegen den Einlassventilsitz 40 gedrängt, die sich an einem Einlassventilkäfig 46 abstützt. Der Einlassventilkäfig 46 ist einstückig mit dem Hochdruckdichtring 32 ausgebildet.

Das Ventilsitzteil 36 ist mittels Dreh- und Fräsprozessen ferner rohrförmig gestaltet und weist dabei insgesamt drei Durchgangsöffnungen 48 auf, die sich radial durch seine Rohrwand erstrecken. Durch diese Durchgangsöffnungen 48 kann Bremsfluid von einem radial äußeren Einlass 50 nach radial innen und dann durch den Einlassventilsitz 40 geführt werden. An der vom Einlassventilsitz 40 abgewandten Seite des Ventilsitzteils 36 befindet sich an diesem innenseitig ein Absatz 52, an dem eine Kolbenstange 54 mit einem Stirnende eingepresst ist. Die Kolbenstange 54 wird mittels eines (nicht dargestellten) Exzenters an ihrem gegenüberliegenden Stirnende in ihrer Längsrichtung und damit in Axialrichtung des Fahrzeugbremsanlagen-Kolbenpumpen-Kolbens 30 bewegt. Bei dieser Bewegung wird entsprechend der gesamte Fahrzeugbremsanlagen-Kolbenpumpen-Kolben 30 und mit ihm das Ventilsitzteil 36 sowie der dort angeordnete Hochdruckdichtring 32 hin- und herbewegt. Auf diese Weise wird Bremsfluid durch den Einlass 50, die Durchgangsöffnungen 48 und den Einlassventilsitz 40 in den Druckraum 34 eingesaugt, um nachfolgend durch den Auslassventilsitz 20 sowie den Auslass 28 unter Druck aus dem Druckraum 34 ausgeschoben zu werden.

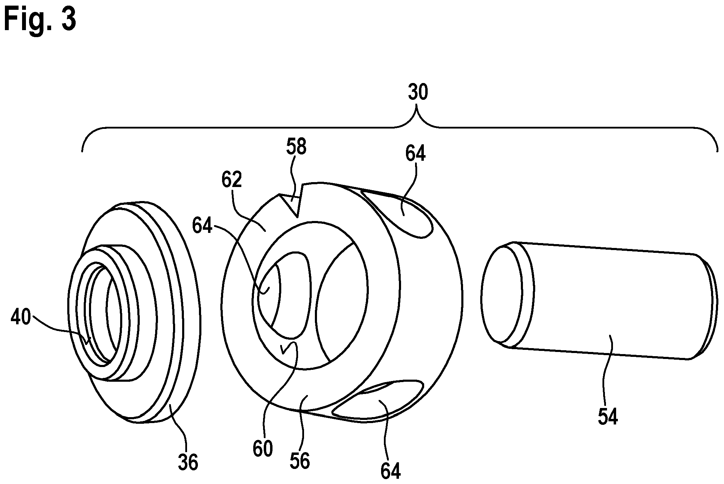

In Fig. 3 ist ein Fahrzeugbremsanlagen-Kolbenpumpen-Kolben 30 dargestellt, der als wesentliche Elemente bzw. Teile ebenfalls an einem Stirnende ein Ventilsitzteil 36 und an seinem gegenüberliegenden Stirnende eine Kolbenstange 54 aufweist.

Allerdings ist bei diesem Fahrzeugbremsanlagen-Kolbenpumpen-Kolben 30 das Ventilsitzteil 36 nicht direkt an die Kolbenstange 54 angekoppelt, sondern dazwischen ein Blechbiegeteil 56 vorgesehen. Das Blechbiegeteil 56 ist aus einem Blech der Dicke 6 mm zu einem Ring bzw. Rohr gewickelt und weist dabei eine Nahtstelle 58 entlang seiner Längsrichtung auf. Die Nahtstelle 58 ist eine im Querschnitt betrachtet V-förmige Einkerbung am Blechbiegeteil 56, die innenseitig geschlossen ist. Auf diese Weise ist ein innen hohler Mantelkörper mit einer dort innen umlaufenden bzw. geschlossenen Mantelfläche 60 gebildet.

Hergestellt wurde das Blechbiegeteil 56 aus einem zunächst plattenförmigen Blech mittels Stanzen, wobei beim Stanzen sowohl eine äußere Kontur 62 als auch drei Durchgangsöffnungen 64 ausgebildet worden sind. Diese Durchgangsöffnungen 64 nehmen dann nach dem Biegen die im Wesentlichen gleiche Position und entsprechend auch die gleiche Funktion ein, wie die Durchgangsöffnungen 48 gemäß Fig. 1 und 2.

An seiner der Kolbenstange 54 zugewandten Stirnseite ist das Blechbiegeteil 56 innen mit einem derartigen Durchmesser gestaltet, dass dort die Kolbenstange 54 mit ihrem zugehörigen Endbereich kraftschlüssig eingepresst werden kann.

An der gegenüberliegenden Stirnseite des Blechbiegeteils 56 ist an dieses das dabei weitgehend scheibenförmige bzw. ringförmige Ventilsitzteil 36 ortsfest angeordnet. Das Anbringen erfolgt mittels Einpressen, Umwickeln, Kleben oder Schweißen. Das derartige Ventilsitzteil 36 ist weiterhin ein Drehteil, kann aber aufgrund seiner stark vereinfachten Form und erheblich geringeren Größe viel kostengünstiger hergestellt werden, als das Ventilsitzteil 36 gemäß Fig. 1 und 2.

## Patentansprüche

1. Fahrzeugbremsanlagen-Kolbenpumpen-Kolben (30), der mit einem Blechbiegeteil (56) hergestellt ist,
**dadurch gekennzeichnet, dass** das Blechbiegeteil (56) als ein Rohr gewickelt ist, das eine Nahtstelle (58) entlang seiner Längsrichtung aufweist.

2. Fahrzeugbremsanlagen-Kolbenpumpen-Kolben nach Anspruch 1,
bei dem das Blechbiegeteil (56) aus einem Blech mit einer Dicke von 2 mm bis 10 mm, vorzugsweise von 4 bis 8 mm, besonders bevorzugt von 6 mm hergestellt ist.

3. Fahrzeugbremsanlagen-Kolbenpumpen-Kolben nach Anspruch 1 oder 2,
bei dem das Blechbiegeteil (56) als ein innen hohler Mantelkörper gestaltet ist.

4. Fahrzeugbremsanlagen-Kolbenpumpen-Kolben nach einem der Ansprüche 1 bis 3,
bei dem das Blechbiegeteil (56) vor seinem Biegen als ein Stanzteil hergestellt ist.

5. Fahrzeugbremsanlagen-Kolbenpumpen-Kolben nach Anspruch 4,
bei dem an dem Stanzteil mindestens eine Durchgangsöffnung (48) ausgebildet ist.

6. Fahrzeugbremsanlagen-Kolbenpumpen-Kolben nach einem der Ansprüche 1 bis 5,
bei dem ein ringförmiges Ventilsitzteil (36) an dem Blechbiegeteil (56) angeordnet ist, insbesondere an dem Blechbiegeteil (56) eingepresst ist oder von dem Blechbiegeteil (56) umwickelt ist.

7. Fahrzeugbremsanlagen-Kolbenpumpen-Kolben nach Anspruch 6,
bei dem das Ventilsitzteil (36) ein Drehteil, ein Kaltschlagteil oder ein Tiefziehteil ist.

8. Fahrzeugbremsanlagen-Kolbenpumpen-Kolben nach einem der Ansprüche 1 bis 7,
bei dem eine Kolbenstange (54) an dem Blechbiegeteil (56) angeordnet ist, insbesondere an dem Blechbiegeteil (56) eingepresst ist oder von dem Blechbiegeteil (56) umwickelt ist.

9. Verfahren zum Herstellen eines Fahrzeugbremsanlagen-Kolbenpumpen-Kolbens (30), mit den Schritten:
- Bereitstellen eines plattenförmigen Blechteils und
- Biegen des plattenförmigen Blechteils zu einem einen Teil des Fahrzeugbremsanlagen-Kolbenpumpen-Kolbens (30) bildenden Blechbiegeteil (56), **dadurch gekennzeichnet, dass** beim Biegen des Blechteils dieses zu einem Rohr gewickelt und entlang dessen Längsrichtung eine Nahtstelle (58) hergestellt wird.

10. Verfahren nach Anspruch 9,
bei dem das Bereitstellen eines plattenförmigen Blechteils ein Stanzen dieses Blechteils umfasst.

## Claims

1. Vehicle brake system piston-pump piston (30) which is produced with a sheet-metal bent part (56), **characterized in that** the sheet-metal bent part (56) is rolled as a tube which has a seam (58) along its longitudinal direction.

2. Vehicle brake system piston-pump piston according to Claim 1, in the case of which the sheet-metal bent part (56) is produced from a metal sheet with a thickness of from 2 mm to 10mm, preferably of from 4 to 8 mm, particularly preferably of 6 mm.

3. Vehicle brake system piston-pump piston according to Claim 1 or 2, in the case of which the sheet-metal bent part (56) is designed as a skirt body which is hollow on the inside.

4. Vehicle brake system piston-pump piston according to one of Claims 1 to 3, in the case of which the sheet-metal bent part (56) is produced as a punched part before it is bent.

5. Vehicle brake system piston-pump piston according to Claim 4, in the case of which at least one through opening (48) is configured in the punched part.

6. Vehicle brake system piston-pump piston according to one of Claims 1 to 5, in the case of which an annular valve seat part (36) is arranged on the sheet-metal bent part (56), in particular is pressed into the sheet-metal bent part (56) or is wrapped around by the sheet-metal bent part (56).

7. Vehicle brake system piston-pump piston according to Claim 6, in the case of which the valve seat part (36) is a turned part, a cold-formed part or a deep-drawn part.

8. Vehicle brake system piston-pump piston according to one of Claims 1 to 7, in the case of which a piston rod (54) is arranged on the sheet-metal bent part (56), in particular is pressed into the sheet-metal bent part (56) or is wrapped around by the sheet-metal bent part (56) .

9. Method for producing a vehicle brake system piston-pump piston (30), with the following steps:
- providing of a plate-shaped sheet-metal component, and
- bending of the plate-shaped sheet-metal component to form a sheet-metal bent part (56) which forms a part of the vehicle brake system piston-pump piston (30), **characterized in that**, during the bending of the sheet-metal part, it is rolled to form a tube and a seam (58) is produced along its longitudinal direction.

10. Method according to Claim 9, in the case of which the providing of a plate-shaped sheet-metal part comprises punching of the said sheet-metal part.

## Revendications

1. Piston (30) destiné à une pompe à piston d'un système de freinage de véhicule et fabriqué à partir d'une pièce de tôle pliée (56),
**caractérisé en ce que** la pièce de tôle pliée (56) est enroulée sous la forme d'un tube qui comporte un joint de soudure (58) le long de sa direction longitudinale.

2. Piston destiné à une pompe à piston d'un système de freinage de véhicule selon la revendication 1,
dans lequel la pièce de tôle pliée (56) est fabriquée à partir d'une tôle d'une épaisseur de 2 mm à 10 mm, de préférence de 4 à 8 mm, de manière particulièrement préférée de 6 mm.

3. Piston destiné à une pompe à piston d'un système de freinage de véhicule selon la revendication 1 ou 2,
dans lequel la pièce de tôle pliée (56) est réalisée sous la forme d'un corps d'enveloppe creux à l'intérieur.

4. Piston destiné à une pompe à piston d'un système de freinage de véhicule selon l'une des revendications 1 à 3,
dans lequel la pièce de tôle pliée (56) est réalisée sous la forme d'une pièce emboutie avant d'être pliée.

5. Piston de pompe à piston d'un système de freinage de véhicule selon la revendication 4,
dans lequel au moins une ouverture traversante (48) est ménagée au niveau de la pièce emboutie.

6. Piston de pompe à piston d'un système de freinage de véhicule selon l'une des revendications 1 à 5,
dans lequel une partie formant siège de soupape annulaire (36) est disposée au niveau de la pièce de tôle pliée (56), en particulier est pressée sur la pièce de tôle pliée (56) ou entourée par la pièce de tôle pliée (56).

7. Piston de pompe à piston d'un système de freinage de véhicule selon la revendication 6,
dans lequel la partie formant siège de soupape (36) est une partie formée par tournage, une partie formée par frappe à froid ou une partie formée par emboutissage profond.

8. Piston de pompe à piston d'un système de freinage de véhicule selon l'une des revendications 1 à 7,
dans lequel une tige de piston (54) est disposée au niveau de la partie de tôle pliée (56), en particulier est pressée sur la partie de tôle pliée (56) ou est entourée par la partie de tôle pliée (56).

9. Procédé de fabrication d'un piston (30) destiné à une pompe à piston d'un système de freinage de véhicule, le procédé comprenant les étapes suivantes :
- fournir une pièce de tôle en forme de plaque et
- plier la pièce de tôle en forme de plaque pour former une pièce de tôle (56) formant une partie du piston (30) de la pompe à piston d'un système de freinage de véhicule, **caractérisé en ce que**, lorsque la pièce de tôle est pliée, celle-ci est enroulée pour former un tube et un joint de soudure (58) est réalisé dans sa direction longitudinale.

10. Procédé selon la revendication 9,
dans lequel la fourniture d'une pièce de tôle en forme de plaque comprend l'emboutissage de cette pièce de tôle.
